# EUROPÄISCHE PATENTANMELDUNG

(11) **EP 3 457 418 A1**
(43) Veröffentlichungstag der Anmeldung: **20.03.2019**
(21) Anmeldenummer: 17191508.5
(22) Anmeldetag: 18.09.2017
(51) Int. Cl.: H01G 4/32, H01G 4/224, H01G 4/232, H01G 4/228, H01G 2/10, H01G 11/82, H01G 11/10, H01G 9/06, H01G 9/08, H01G 9/26, H01G 4/38

(54) **NIEDERINDUKTIVER KONDENSATOR UND KONDENSATORBANK**

(71) Anmelder: Siemens Mobility GmbH, 81739 München (DE)
(72) Erfinder: Ackermann, Markus, 91301 Forchheim (DE)

(57) **Zusammenfassung**

Die Erfindung betrifft einen Kondensator (1) mit einem Kondensatorbecher (2) bestehend aus Metall, einem Kondensatordeckel (3), der derart an dem Kondensatorbecher (2) angeordnet ist, dass er den Kondensatorbecher (2) feuchtedicht verschließt, einem ersten elektrischen Anschluss (11) und einen zweiten elektrischen Anschluss (12) und mindestens einem zylinderförmigen Wickel (20) mit einem ersten Wickelteil (21) und einem zweiten Wickelteil (22), wobei der Kondensator (1) in Form eines senkrechten Kreiszylinders ausgestaltet ist. Zur Verbesserung des Kondensators wird vorgeschlagen, dass der erste und der zweite elektrische Anschluss (21,22) auf der gleichen Grundfläche (10) des Kondensators (1) angeordnet sind, wobei der erste Anschluss (11) gegenüber dem Kondensatorbecher (2) elektrisch isoliert ist und der zweite elektrische Anschluss (12) mit dem Kondensatorbecher (2) elektrisch leitend verbunden ist, wobei der erste Anschluss (11) mit dem ersten Wickelteil (21) verbunden ist, wobei der zweite Wickelteil (22) mit dem Kondensatorbecher (2) elektrisch verbunden ist. Ferner betrifft die Erfindung eine Kondensatorbank (5) mit einer Vielzahl von derartigen Kondensatoren (1), wobei die Kondensatoren (1) in einem Gehäuse (6) angeordnet sind, wobei das Gehäuse (6) elektrisch isolierend ausgebildet ist.

## Beschreibung

Die Erfindung betrifft einen Kondensator mit einem Kondensatorbecher bestehend aus Metall, einem Kondensatordeckel, der derart an dem Kondensatorbecher angeordnet ist, dass er den Kondensatorbecher feuchtedicht verschließt, einem ersten und einem zweiten elektrischen Anschluss und mindestens einem zylinderförmigen Wickel mit einem ersten Wickelteil und einem zweiten Wickelteil, wobei der Kondensator in Form eines senkrechten Kreiszylinders ausgestaltet ist. Ferner betrifft die Erfindung eine Kondensatorbank mit einer Vielzahl von derartigen Kondensatoren.

Moderne Leistungshalbleiter, insbesondere auf Basis von Siliziumcarbit (SiC), erfordern niederinduktive Kommutierungskreise. Stromrichter umfassen dabei beispielsweise solche Leistungshalbleiter. Die Leistungsdichte der Stromrichter steigt weiter, so dass höhere Puls- und Effektivströme beim Design des Kommutierungskreises zu berücksichtigen sind. Die für den Betrieb notwenigen Zwischenkreiskondensatoren müssen niederinduktiver, kompakter und kostengünstiger werden, um die Anforderungen an den Stromrichter zu erfüllen. Es sind höhere Verlustleistungsdichten, Stromänderungen, Pulsströme und höherfrequente Stromspektren zu bewältigen.

Zwischenkreiskondensatoren für Gleichspannungen größer 1kV auf Basis von metallisierter Kunststofffolie werden in prismatischer Bauform und in Rundbechern angeboten. Die prismatischen Bauformen zeichnen sich durch Kompaktheit aus und sind bei großen Kapazitäten eine kostengünstige Lösung (Euro/ Joule).

Für die schneller schaltenden SiC-Bauelemente stellt die verhältnismäßig große Eigeninduktivität eine Einschränkung dar. Die kompakte Bauform stößt bei der Abfuhr der Verlustleistung an Grenzen. Verschärfend wirken die steileren Stromflanken und die daraus resultierenden höherfrequenten Stromspektren, welche den inneren Aufbau aus vielen Kondensatorelementen zu Oszillationen anregt. Aufgrund dieser Randbedingungen ist bei Zwischenkreiskondensatoren eine Tendenz zu Kondensatoren in Rundbechern erkennbar. Die einzelnen Kondensatoren werden extern mittels Stromschiene (Busbar) zu einem Zwischenkreis verschaltet. Dies führt zu niederinduktiven Zwischenkreiskondensatorbatterien.

Typisch für Rundbecherbauformen ist, ein tiefgezogener Aluminiumbecher in dem ein oder mehrere Folienwickel, auch als Wickel bezeichnet, eingebracht werden. Die Folienwickel sind gegen Gehäuse isoliert und mit den zwei Terminals über Kupferlitzen oder Kupferbändern verbunden. Der Leiter wird entweder im Wickeldorn oder zwischen Wickel und Gehäuse geführt. Ein Leiter durch den Wickeldorn führt zu Performancenachteilen, weil dort der Hotspot des Wickels liegt. Der Leiter zwischen Wickel und Gehäuse reduziert die mögliche Wickelgröße (Kapazität) und führt zu Wechselwirkungen (induktiver Kopplung) mit benachbarten Leitern / Kondensatoren.

Für klimatisch anspruchsvolle Einsatzbedingungen werden die Kondensatoren mit einem Metalldeckel verschlossen, durch diesen dann die Terminals isoliert geführt werden. Rundbecherkondensatoren nach diesem Bauprinzip weisen eine vergleichsweise hohe Eigeninduktivität auf, so dass viele Kondensatoren notwendig sind, um niederinduktive Zwischenkreise zu erreichen. Dies führt zu großen Kondensatorbatterien, weil jeder Kondensator für sich isoliert ist. Des Weiteren beeinflussen sich Kondensatoren mit Rückleitern neben dem Wickel induktiv untereinander.

Erwähnt sei noch die Lösung mit verteilten Zwischenkreisen. Hierbei wird der zentrale relativ hochinduktive Zwischenkreiskondensator durch kleine Kondensatoren direkt in der Stromschiene (Busbar) ergänzt. Dies führt zu sehr niederinduktiven Kapazitäten nah am Leistungshalbleiter, wobei dies einen deutlichen Mehraufwand bedeutet. Zusätzlich ergeben sich technische Herausforderungen, wie das Schwingungsverhalten der Teilkapazitäten untereinander und mit dem Zentralkondensator.

Gehäuselose Kondensatoren erreichen ähnliche Induktivitätswerte, sind aber für anspruchsvolle Umgebungsbedingungen (hohe Feuchte) ungeeignet. Lösungen, in denen der Kondensator in die Verschienung (Busbar) integriert ist, haben Performancenachteile durch die hohe Temperatur, sofern nicht zusätzlich die Verschienung gekühlt wird. Die Lösungen sind zudem vergleichsweise teuer.

Der Erfindung liegt die Aufgabe zugrunde, einen zylinderförmigen Kondensator zu verbessern.

Diese Aufgabe wird durch einen Kondensator mit einem Kondensatorbecher bestehend aus Metall, einem Kondensatordeckel, der derart an dem Kondensatorbecher angeordnet ist, dass er den Kondensatorbecher feuchtedicht verschließt, einem ersten und einem zweiten elektrischen Anschluss und mindestens einem zylinderförmigen Wickel mit einem ersten Wickelteil und einem zweiten Wickelteil gelöst, Wobei der Kondensator in Form eines senkrechten Kreiszylinders ausgestaltet ist, wobei der erste und der zweite elektrische Anschluss auf der gleichen Grundfläche des Kondensators angeordnet sind, wobei der erste Anschluss gegenüber dem Kondensatorbecher elektrisch isoliert ist und der zweite elektrische Anschluss mit dem Kondensatorbecher elektrisch leitend verbunden ist, wobei der erste Anschluss mit dem ersten Wickelteil verbunden ist, wobei der zweite Wickelteil mit dem Kondensatorbecher elektrisch verbunden ist. Ferner wird diese Aufgabe durch eine Kondensatorbank mit einer Vielzahl von derartigen Kondensatoren gelöst, wobei die Kondensatoren in einem Gehäuse angeordnet sind, wobei das Gehäuse elektrisch isolierend ausgebildet ist.

Weitere vorteilhafte Ausgestaltungen der Erfindung sind in den abhängigen Ansprüchen angegeben.

Der Erfindung liegt die Erkenntnis zugrunde, dass sich der Kondensator dadurch verbessern lässt, dass der Kondensatorbecher als leitendes Medium genutzt wird, um den Strom vom zweiten elektrischen Anschluss zum zweiten Wickelteil zu transportieren. Der Übergang vom Kondensatorbecher zum zweiten Wickelteil wird mit einer Kontaktierung hergestellt. Damit entspricht das Potential des Bechers dem Potential des zweiten elektrischen Anschlusses. Dieses Potential ist somit nicht frei wählbar. Eine dauerhafte Erdung des Kondensatorbechers kann aus diesem Grunde nicht vorgenommen werden. Der Kondensatorbecher stellt als leitende Verbindung eine besonders niederinduktive Verbindung dar. Zudem ist diese im Vergleich zu einem Leiter, der durch das Innere des Kondensators geführt wird, auch gegenüber Beschädigungen sehr robust. Dies erhöht die Zuverlässigkeit des Kondensators erheblich und macht Ausfälle unwahrscheinlicher. Aufgrund der Außenfläche aus Aluminium besitzt der Kondensator gute Kühleigenschaften, da die Wärme aus dem Inneren großflächig an die Umgebung abgeführt werden kann.

Die Ausführung des Kondensatorgehäuses als feuchtedicht hat den Vorteil, dass keine Feuchtigkeit in das Innere des Kondensators eindringen und diesen zerstören kann. Auch eine Verminderung der Leistungsfähigkeit durch eindringende Feuchtigkeit kann zuverlässig vermieden werden. Diese Kondensatoren werden auch als gekapselte Kondensatoren bezeichnet.

Als besonders vorteilhaft hat es sich erwiesen, wenn der Kondensatorbecher und/oder der Kondensatordeckel aus Aluminium bestehen. Aluminium ist kostengünstig verfügbar, besitzt eine hohe Stromtragfähigkeit, einen geringen elektrischen Widerstand. Darüber hinaus verleiht es dem Kondensator eine hohe mechanische Stabilität. Die thermische Leitfähigkeit des Aluminiums erlaubt darüber hinaus eine gute Wärmeabfuhr aus dem Inneren des Kondensators an die Umgebung.

Alternativ kann der Kondensatorbecher und/oder der Kondensatorboden aus Edelstahl bestehen. Edelstahl ist unempfindlich gegenüber einer aggressiven Umgebung, wie Feuchtigkeit, Gasen, etc. Bezüglich elektrische und thermische Leitfähigkeit können annähernd die gleichen positiven Eigenschaften wie beim Aluminium genutzt werden. Darüber hinaus besitzt Edelstahl einen spezifischen Widerstand, der es erlaubt, entstehende elektrische Schwingungen, beispielsweise in Strom und/oder Spannung, zu bedämpfen. Damit ist ein besonders stabiles elektrisches Verhalten erreichbar.

Neben der Verwendung von Aluminium und Edelstahl kann auch ein beliebiger Materialmix aus Aluminium und Edelstahl für Kondensatorbecher und/oder Kondensatordeckel genutzt werden.

Als Grundfläche bezeichnet man die kreisförmige Fläche des senkrechten Kreiszylinders, die an die Mantelfläche grenzt. Die Mantelfläche umgibt den Zylinder und ist dabei kreisförmig gebogen.

Da das Gehäuse der Kondensatoren nicht geerdet ist, hat es sich als vorteilhaft erwiesen, mehrere Kondensatoren zu einer Kondensatorbatterie zusammenzufassen und in einem Gehäuse anzuordnen. Das Gehäuse kann entweder mit einem vorgebbaren Potential, beispielsweise dem Erdpotential, verbunden werden. Alternativ kann das Gehäuse aus einem elektrisch isolierenden Werkstoff ausgebildet. Ebenso ist es möglich, das Gehäuse elektrisch isolierend auszubilden, indem ein elektrisch leitender Werkstoff des Gehäuses mit einer Isolierschicht versehen wird, um einen Schutz vor dem Berühren unzulässig hoher Spannungen sicherzustellen.

Bei einer vorteilhaften Ausgestaltung der Erfindung sind der erste und der zweite elektrische Anschluss auf dem Boden des Kondensatorbechers angeordnet, wobei der zweite Wickelteil im Bereich des Kondensatordeckels mit dem Kondensatorbecher elektrisch verbunden ist. Während der Montage des Kondensators ist der Bereich im Kondensatordeckel besonders leicht zugänglich, wenn der Kondensator noch geöffnet ist, das heißt noch nicht mit dem Kondensatordeckel feuchtedicht verschlossen ist. Zu diesem Zeitpunkt kann auf einfache Weise eine leitende Verbindung vom Kondensatorbecher zum zweiten Wickelteil eingebracht werden. Alternativ oder ergänzend ist es auch möglich, eine elektrische Verbindung vom Kondensatordeckel zum zweiten Wickelteil herzustellen. Weiterhin kann durch Einbringen eines Isolierstoffes die elektrische Verbindung derart fixiert werden, dass eine Beschädigung der elektrischen Verbindung ausgeschlossen oder zumindest deutlich reduziert werden kann. Als Isolierstoff kommt dazu beispielsweise ein Verguss in Frage. Der Verguss macht den Kondensator darüber hinaus steif, was eine besonders hohe Eigenfestigkeit des Kondensators bewirkt.

Bei einer weiteren vorteilhaften Ausgestaltung der Erfindung ist die Isolierung zwischen Wickel und Kondensatorbecher auf die Betriebsspannung des Kondensators ausgelegt. Dadurch, dass das Kondensatorgehäuse nicht auf ein beliebiges Potential, wie beispielsweise auf das Erdpotential, gelegt werden kann, verringern sich die Anforderungen an die Isolierung im Innern des Kondensators. Der Kondensator ist dabei lediglich auf Funktionsisolierung auszulegen. Bei der Auslegung Funktionsisolierung wird davon ausgegangen, dass im Innern des Kondensators, im besonderen zwischen dem Wickel und dem Kondensatorbecher maximal die Betriebsspannung anstehen kann, die zwischen dem ersten und dem zweiten elektrischen Anschluss an den Kondensator anliegt. Eine Funktionsisolierung ist deutlich einfacher herstellbar als eine Basisisolierung, bei der eine Isolierung des Kondensators gegenüber einem festgelegten Potential, wie beispielsweise dem Erdpotential erfolgt. Die Funktionsisolierung kann deutlich dünner ausgeführt werden, so dass bei festgelegter Kapazität des Kondensators die Baugröße abnimmt oder bei festgelegter Baugröße die Kapazität des Kondensators größer ist.

Bei einer weiteren vorteilhaften Ausgestaltung der Erfindung weist der erste und/oder zweite Anschluss Edelstahl auf. Edelstahl lässt sich gut mit dem Aluminium des Kondensatorbechers verbinden, ohne dass chemische Veränderungen zwischen diesen Bauteilen zu erwarten sind. Edelstahl wiederum lässt sich ebenfalls mit Kupfer einer Stromschiene verbinden, ohne dass chemische Veränderungen zwischen diesen Bauteilen zu erwarten sind. Allerdings weist Edelstahl einen höheren Widerstand auf. Dieser Widerstand kann gezielt dazu genutzt werden, Schwingkreise, die durch die Kapazität des Kondensators und/oder parasitären Kapazitäten des Kondensators im Zusammenspiel mit induktivem Verhalten der Leiter entstehen, zu bedämpfen. Dabei hat es sich gezeigt, dass der Widerstand, der sich ergibt, wenn Edelstahl als elektrischer Anschluss genutzt wird, zum einen diese Schwingkreise hinreichend bedämpft und gleichzeitig die Verluste des Kondensators nur unwesentlich erhöht. Zudem lässt sich eine Verbindung zwischen Kondensator und Kupferstromschiene herstellen, die keiner chemischen oder elektrochemischen Veränderung unterliegt.

Bei einer weiteren vorteilhaften Ausgestaltung der Erfindung ist der Kondensatorbecher an seiner Außenfläche mit einem elektrischen Isolator umgeben. Um, falls erforderlich, einen Berührschutz des Kondensators herzustellen, hat es sich als vorteilhaft erwiesen, die gesamte Außenfläche des Kondensators mit Mantelfläche und Grundflächen oder zumindest die Mantelfläche des zylinderförmigen Kondensators mit einem Isolator zu versehen. Beispielsweise kann hierfür ein Schrumpfschlauch zum Einsatz kommen.

Bei einer weiteren vorteilhaften Ausgestaltung der Erfindung ist der zylinderförmige Wickel des Kondensators selbstheilend ausgebildet. Damit ist es möglich, kleinere Beschädigungen im Kondensator derart zu begegnen, dass ein Kurzschluss zwischen den zwei Wickelteilen vermieden wird und ein Betrieb des Kondensators weiterhin möglich ist.

Bei einer weiteren vorteilhaften Ausgestaltung der Erfindung weisen der erste elektrische Anschluss ein Mittel zur Verbindung mit einer ersten Stromschiene auf und der zweite elektrische Anschluss ein weiteres Mittel zur Verbindung mit einer zweiten Stromschiene auf, wobei das Mittel zur Verbindung mit der ersten Stromschiene und das weitere Mittel zur Verbindung mit der zweiten Stromschiene unterschiedlich zum Kondensatorbecher 2 beabstandet sind. Damit ist es möglich, den Kondensator mit geschichtet angeordneten Stromschienen zu verbinden. Bei geschichtet angeordneten Stromschienen liegen die mindestens zwei Stromschienen übereinander, wobei zwischen den Stromschienen ein Isolator angeordnet ist. Dieser kompakte Aufbau ist mechanisch stabil und weist darüber hinaus eine besonders geringe Induktivität auf. Durch die geschichteten Stromschienen ist auch die Montage der Strommaschinen an den Kondensator besonders einfach und Anschlussfehler können zuverlässig verhindert werden.

Bei einer weiteren vorteilhaften Ausgestaltung der Erfindung weist der Kondensatordeckel einen dritten elektrischen Anschluss auf, wobei der dritte elektrische Anschluss mit dem Kondensatordeckel elektrisch verbunden ist. Mit dem dritten Anschluss kann auf einfache Weise eine leitende Verbindung zwischen Kondensatordeckel und zweitem Wickelteil erreicht werden. Als besonders vorteilhaft hat sich eine CUPAL-Scheibe erwiesen, mit der die elektrische Verbindung zwischen Deckel und Wickel hergestellt werden kann. Diese ist sehr robust und damit unempfindlich gegenüber Erschütterungen des Kondensators. Zudem sind CUPAL-Scheiben preisgünstig und in hoher Stückzahl am Markt verfügbar. Auf aufwendige Fertigungsverfahren kann darüber hinaus verzichtet werden.

Bei einer weiteren vorteilhaften Ausgestaltung der Erfindung weist der Kondensator mindestens zwei Wickel auf, wobei die Wickel elektrisch in Serienschaltung angeordnet sind. Mit der Reihenschaltung kann bei fest vorgegebener Wickellänge von beispielsweise 150mm deutlich höhere Kondensatorspannungen erreicht werden. Zudem verbessert sich die Stromtragfähigkeit durch die Reihenschaltung mehrerer Wickel im Kondensator.

Im Folgenden wird die Erfindung anhand der in den Figuren dargestellten Ausführungsbeispiele näher beschrieben und erläutert. Es zeigen:
- FIG 1: eine Draufsicht auf ein Ausführungsbeispiel eines gekapselten Kondensators
- FIG 2 bis FIG 5: einen Schnitt durch verschiedene Ausführungsbeispiele eines gekapselten Kondensators und
- FIG 6: eine Kondensatorbank.

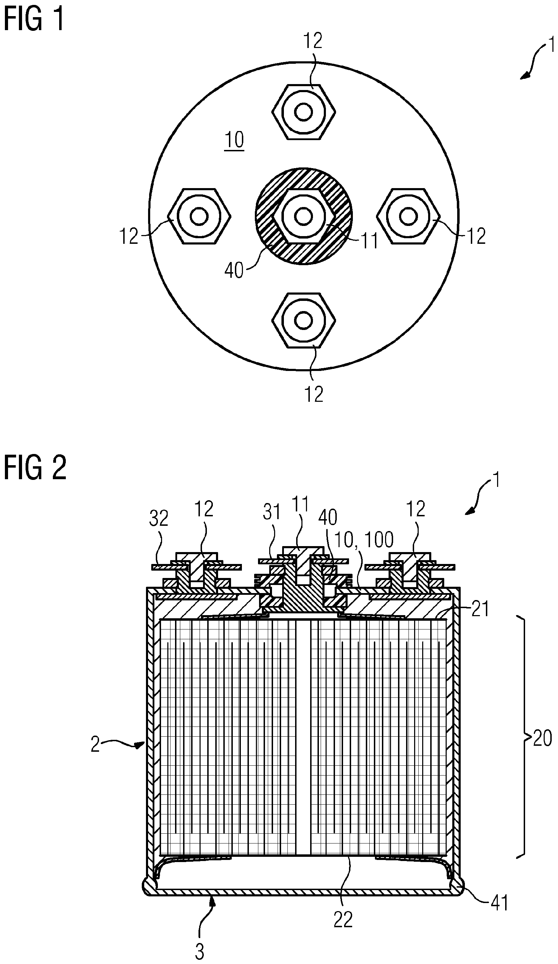

Die FIG 1 zeigt eine Draufsicht auf einen Kondensator 1. Dieser Kondensator weist einen ersten elektrischen Anschluss 11 und vier zweite elektrische Anschlüsse 12 auf. Die elektrischen Anschlüsse werden auch als Terminals bezeichnet. Während die zweiten elektrischen Anschlüsse 12 elektrisch leitend mit der Grundfläche 10 des Kondensators 1 verbunden sind, ist zwischen dem ersten elektrischen Anschluss 11 und der Grundfläche 10 ein Isolator 40 angeordnet, der den ersten elektrischen Anschluss vom Gehäuse des Kondensators, d.h. vom Kondensatorbecher 2 und Kondensatordeckel 3, elektrisch isoliert.

Die FIG 2 zeigt einen Schnitt durch ein Ausführungsbeispiels eines Kondensators 1. In diesem Ausführungsbeispiel weist der Kondensator 1 ein metallisches Kondensatorgehäuse mit einem Kondensatorbecher 2 und einem Kondensatordeckel 3 auf. Zur Vermeidung von Wiederholungen wird auf die Beschreibung zur FIG 1 sowie auf die dort eingeführten Bezugszeichen verwiesen. In den Boden 100 des Kondensatorbechers 2 sind die ersten und zweiten elektrischen Anschlüsse 11,12 eingebracht. Diese zweiten Anschlüsse 12 können beispielsweise eingepresst, genietet oder geschraubt mit dem Kondensatorbecher 2 leitfähig verbunden werden. Ein vom Kondensatorbecher 2 isolierte erster Anschluss 11 wird beispielsweise durch die Mitte des Bodens 100 geführt. Die Ausführung kann wie im Beispiel eine Verschraubung mit Dichtung und Isolator 40 sein oder einfacher durch einen Dichtring ausgeführt werden. Im Innern des Kondensators 1 ist ein zylinderförmiger Wickel 20 angeordnet, der ein erstes Wickelteil 21 und ein zweites Wickelteil 22 umfasst. Zwischen erstem Wickelteil 21 und dem zweitem Wickelteil 22 bildet sich die Kapazität des Kondensators 1 aus. Im Schnitt wird deutlich, dass der Wickel 20 oben an der Schoopierung (Kontaktschicht zum metallisiertem Film) kontaktiert und mit dem ersten Anschluss 11 leitfähig verbunden wird. Anschließend wird der Wickel 20 in das Innere des Kondensators 1 geschoben und der erste Anschluss 11 mit dem ersten Wickelteil 21 verschraubt. Der zweite Wickelteil 22 wird leitfähig mit dem Kondensatorgehäuse, insbesondere mit dem Kondensatorbecher 2 und/oder dem Kondensatordeckel 3 verbunden. Die Kontaktierung des zweiten Wickels 21 mit dem Kondensatorbecher 2 könnte mittels Umformung oder einer Ultraschallschweißung erfolgen. Die Isolierung im Innern des Kondensators 1 zwischen Gehäuse und oberer Schoopierung wird typischerweise mit isolierenden Abstandshalter (Papier, o.ä.) erreicht. Des Weiteren wird der Kondensator vor dem Verschluss des Deckels mit Öl, Gas (z.B. Stickstoff) oder Verguss imprägniert. Vorteilhaft ist Verguss, weil der Kondensator 1 so eine gewisse Steifigkeit erhält. Zielsetzung ist die schraffierte Fläche zu minimieren. Je kleiner diese Fläche, desto niederinduktiver wird der Kondensator 1. Diese Fläche kann gegenüber konventionellen Lösungen um bis zu 50% reduziert werden. Der Stromfluss erfolgt dann vom ersten Anschluss 11 über die Verbindung zum ersten Wickelteil 21. Mit dem kapazitiven Verhalten des Wickels dann über den zweiten Wickelteil 22 zum Kondensatorbecher 2 und von dort zum zweiten elektrischen Anschluss 22. Aufgrund des koaxialen Aufbaues, können sehr kleine Induktivitäten trotz langen Wickels 20 erreicht werden. In solch einem Kondensator 1 kann entsprechend mehr Kapazität (bis zu 25%) bei gleicher Baugröße erreicht werden. Aufgrund der gleichmäßigen Stromführung wird eine höhere Pulsstrombestbarkeit des Wickels 20 erzielt. Des Weiteren führt der koaxiale Aufbau zu einer Minimierung unerwünschter induktiver Beeinflussungen der Umgebung. Die Lösung ist zumindest hinreichend dicht gegen Feuchte und kann so auch unter widrigen Umweltbedingungen eingesetzt werden.

Aufgrund der guten thermischen Anbindung des Kondensatorgehäuses, d.h. des Kondensatorbechers 2 und des Kondensatordeckels 3, an den Wickel 20 ergeben sich Vorteile für die Kühlung bzw. die Effektivstrombelastbarkeit. Gegenüber in die Stromschienen (Busbar) integrierte Kondensatoren bleibt noch erwähnt, dass sich eine Kondensatorbank 5 mit einer Vielzahl derartiger Kondensatoren 1 deutlich besser skalieren lässt.

Das Kondensatorgehäuse wird feuchtedicht verschlossen. Dies geschieht durch Verbinden des Kondensatorbechers 2 mit dem Kondensatordeckel, beispielsweise mittels einer Bördelung 41.

Der erste elektrische Anschluss 11 weist ein Mittel 31 zur Befestigung einer ersten Stromschiene auf. Darüber hinaus weist der zweite elektrische Anschluss 12 ein weiteres Mittel 32 zur Befestigung einer zweiten Stromschiene auf. Dabei haben diese Mittel 31, 32 einen unterschiedlichen Abstand zur Grundfläche 10 des Kondensators 1. Dies ermöglicht die einfache Verwendung geschichtet angeordneter Stromschienen. In diesem Ausführungsbeispiel ist der Abstand zwischen dem Mittel 31 zur Befestigung der ersten Stromschiene und der Grundfläche 10 des Kondensators 1 größer als der Abstand zwischen dem weiteren Mittel 32 zur Befestigung der zweiten Stromschiene und der Grundfläche 10 des Kondensators 1. Besonders vorteilhaft ist es, wenn die Mittel 31, 32 derart ausgebildet sind, dass bei Anbringung der Stromschienen diese derart ausgerichtet sind, dass eine Oberfläche der Stromschienen zumindest abschnittsweise parallel zur Grundfläche 10 des Kondensators 1 verläuft.

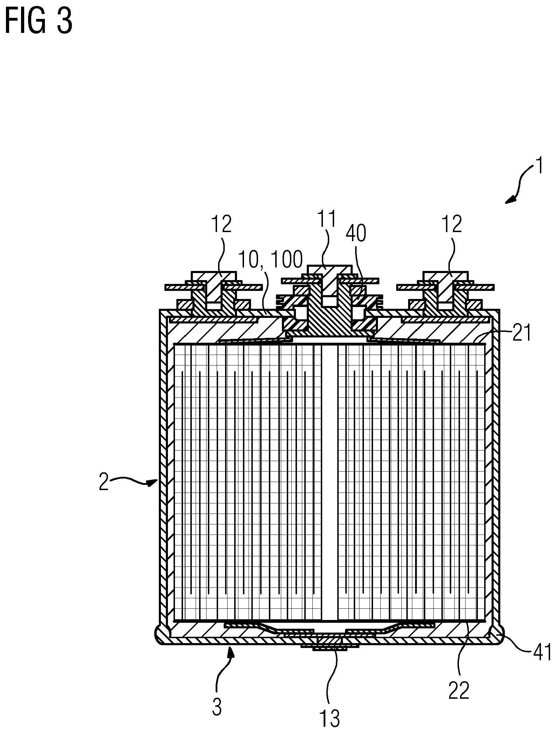

Die FIG 3 zeigt ein weiteres Ausführungsbeispiel eines Kondensators 1. Zur Vermeidung von Wiederholungen wird auf die Beschreibung zu den Figuren 1 und 2 sowie auf die dort eingeführten Bezugszeichen verwiesen. Der wesentliche Unterschied zum Ausführungsbeispiel der FIG 2 ist die Kontaktierung des Wickels 20 mit dem Kondensatorgehäuse, d.h. mit dem Kondensatorbecher 2 und/oder dem Kondensatordeckel 3, über die Bodenschraube des dritten elektrischen Anschlusses 13 im Kondensatordeckel 3 des Kondensators 1. Dieses Ausführungsbeispiel ist geringfügig induktiver als das Ausführungsbeispiel der FIG 2, jedoch ist dafür die Kontaktierung einfacher.

Letztlich wäre für einen Übergang vom Aluminiumbecher eine CUPAL-Scheibe ausreichend. Die Ausführungsbeispiele der Figuren 2 und 3 setzen auf ein Aufbauprinzip bei dem die elektrischen Anschlüsse durch den Boden 100 des Kondensatorbechers 2 geführt werden. Mit anderen Worten wird als Grundfläche 10 der Boden 100 des Kondensatorbechers 2 genutzt.

Üblicherweise dient die Bodenschraube zur Erdung und Befestigung des Kondensators 1. In diesem Ausführungsbeispiel ist das Potential am dritten Anschluss 13 nicht frei wählbar und kann deshalb nicht zur Erdung verwendet werden. Allerdings ist es möglich, dass auch über diesen Anschluss Teile des Betriebsstroms geführt werden.

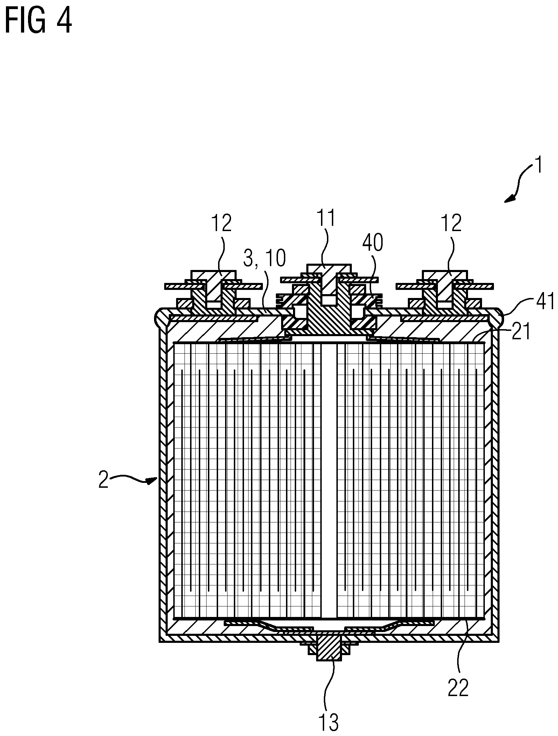

Die FIG 4 zeigt ein weiteres Ausführungsbeispiel eines Kondensators 1. Zur Vermeidung von Wiederholungen wird auf die Beschreibung zu den Figuren 1 bis 3 sowie auf die dort eingeführten Bezugszeichen verwiesen. Der Aufbau besitzt vergleichbare Eigenschaften wie die zuvor erläuterten Ausführungsbeispiele der Figuren 2 und 3. Allerdings sind in diesem Ausführungsbeispiel die ersten und zweiten elektrischen Anschlüsse 11, 12 durch den Kondensatordeckel 3 geführt. Dies ist an der Bördelung 41 zu erkennen, mit der Kondensatorbecher 2 und Kondensatordeckel 3 feuchtedicht miteienander verschlossen sind. Der zylinderförmige Wickel 20 wird über den zweiten Wickelteil 22 elektrisch leitfähig mit der Bodenschraube verbunden und anschließend leitfähig mit dem Kondensatorbecher 2 verschraubt. Der isoliert aufgebaute Anschluss 11 wird auf der anderen Seite des Wickels 20 am ersten Wickelteil 21 kontaktiert. Anschließend erfolgt die Imprägnierung des Wickels 20 mit Öl, Gas oder Verguss sowie das Verschließen des Deckels, beispielsweise mittels Bördelung 41.

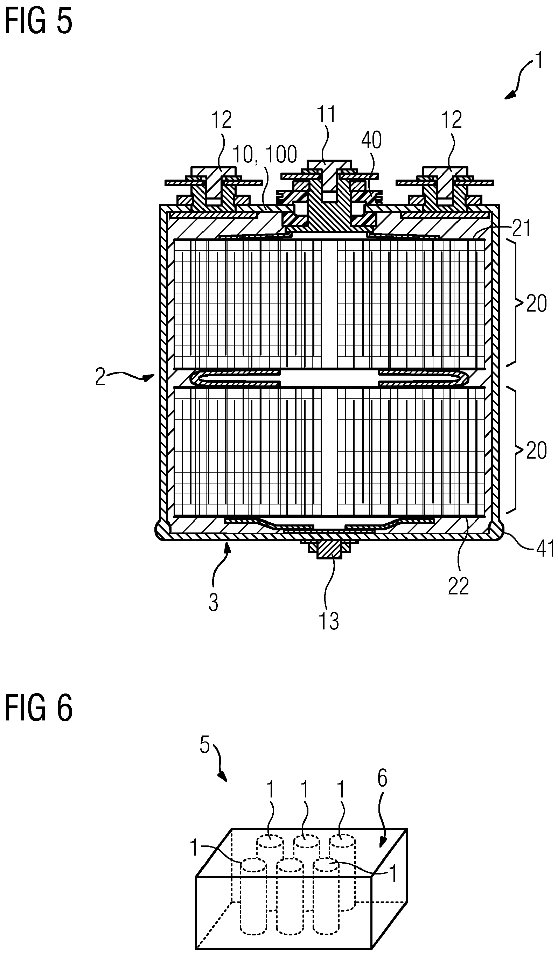

Die FIG 5 zeigt ein weiteres Ausführungsbeispiel eines Kondensators 1. Zur Vermeidung von Wiederholungen wird auf die Beschreibung zu den Figuren 1 bis 4 sowie auf die dort eingeführten Bezugszeichen verwiesen. Dieses Ausführungsbeispiel weist zwei zylinderförmige Wickel 20 im Innern des Kondensators auf, die in einer Serienschaltung angeordnet sind. Dadurch kann dieses Ausführungsbeispiel höhere Kapazitätswerte annehmen, weil die Wickellänge typischerweise auf etwa 150 mm beschränkt ist. Es können darüber hinaus höhere Spannungen bedient werden und es ist eine bessere Stoßstromfestigkeit erreichbar.

Generell bieten alle Ausführungsbeispiele der Figuren 2 bis 5 auch die Möglichkeit, zusätzliche Dämpfungselemente, beispielsweise durch einen Materialmix der elektrischen Anschlüsse, zu integrieren. So dienen beispielsweise elektrische Anschlüsse 11, 12, 13 teilweise oder vollständig aus Edelstahl oder ein Kondensatorbecher 2 teilweise oder vollständig aus Edelstahl als gut kühlbarer Serienwiderstand. Dieser Serienwiderstand wirkt Dämpfend auf ein schwingfähiges System aus Kondensatorkapazität und parasitären Induktivitäten. Eine gute Kühlbarkeit ist wichtig, da die Verluste der Dämpfung im Widerstand entstehen und an die Umgebung abgeführt werden müssen um eine Überhitzung des Kondensators 1 zu verhindern.

Die FIG 6 zeigt eine Kondensatorbank 5 mit einer Vielzahl von Kondensatoren 1. Diese sind in einem Gehäuse 6 angeordnet. Da das Gehäuse der Kondensatoren 1 nicht geerdet ist, hat es sich als vorteilhaft erwiesen, diese Kondensatoren 1 in dem Gehäuse anzuordnen und das Gehäuse entweder mit einem vorgebbaren Potential, beispielsweise dem Erdpotential, zu verbinden oder das Gehäuse aus einem elektrisch isolierenden Werkstoff auszubilden. Alternativ kann das Gehäuse, insbesondere dann, wenn es elektrisch leitend ist, mit einem isolierenden Werkstoff beschichtet werden, um einen Schutz vor dem Berühren unzulässig hoher Spannungen sicherzustellen.

Zusammenfassend betrifft die Erfindung einen Kondensator mit einem Kondensatorbecher bestehend aus Metall, einem Kondensatordeckel, der derart an dem Kondensatorbecher angeordnet ist, dass er den Kondensatorbecher feuchtedicht verschließt, einem ersten elektrischen Anschluss und einen zweiten elektrischen Anschluss und mindestens einem zylinderförmigen Wickel mit einem ersten Wickelteil und einem zweiten Wickelteil wobei der Kondensator in Form eines senkrechten Kreiszylinders ausgestaltet ist. Zur Verbesserung des Kondensators wird vorgeschlagen, dass der erste und der zweite elektrische Anschluss auf der gleichen Grundfläche des Kondensators angeordnet sind, wobei der erste Anschluss gegenüber dem Kondensatorbecher elektrisch isoliert ist und der zweite elektrische Anschluss mit dem Kondensatorbecher elektrisch leitend verbunden ist, wobei der erste Anschluss mit dem ersten Wickelteil verbunden ist, wobei der zweite Wickelteil mit dem Kondensatorbecher elektrisch verbunden ist. Ferner betrifft die Erfindung eine Kondensatorbank mit einer Vielzahl von derartigen Kondensatoren wobei die Kondensatoren in einem Gehäuse angeordnet sind, wobei das Gehäuse elektrisch isolierend ausgebildet ist.

## Patentansprüche

1. Kondensator (1), ausweisend
- einen Kondensatorbecher (2) bestehend aus Metall,
- einen Kondensatordeckel (3), der derart an dem Kondensatorbecher (2) angeordnet ist, dass er den Kondensatorbecher (2) feuchtedicht verschließt,
- einen ersten elektrischen Anschluss (11) und einen zweiten elektrischen Anschluss (12) und
- mindestens einen zylinderförmigen Wickel (20) mit einem ersten Wickelteil (21) und einem zweiten Wickelteil (22),
wobei der Kondensator (1) in Form eines senkrechten Kreiszylinders ausgestaltet ist, wobei der erste und der zweite elektrische Anschluss (21,22) auf der gleichen Grundfläche (10) des Kondensators (1) angeordnet sind, wobei der erste Anschluss (11) gegenüber dem Kondensatorbecher (2) elektrisch isoliert ist und der zweite elektrische Anschluss (12) mit dem Kondensatorbecher (2) elektrisch leitend verbunden ist, wobei der erste Anschluss (11) mit dem ersten Wickelteil (21) verbunden ist, wobei der zweite Wickelteil (22) mit dem Kondensatorbecher (2) elektrisch verbunden ist.

2. Kondensator (1) nach Anspruch 1, wobei der erste und der zweite elektrische Anschluss (11,12) auf dem Boden (100) des Kondensatorbechers (2) angeordnet sind, wobei der zweite Wickelteil (22) im Bereich des Kondensatordeckels (3) mit dem Kondensatorbecher (2) elektrisch verbunden ist.

3. Kondensator (1) nach einem der Ansprüche 1 oder 2, wobei die Isolierung zwischen Wickel (20) und Kondensatorbecher (2) auf die Betriebsspannung des Kondensators (1) ausgelegt ist.

4. Kondensator (1) nach einem der Ansprüche 1 bis 3, wobei der erste und/oder zweite Anschluss (11,12) Edelstahl aufweist.

5. Kondensator (1) nach einem der Ansprüche 1 bis 4, wobei der Kondensatorbecher (2) an seiner Außenfläche (30) mit einem elektrischen Isolator umgeben ist.

6. Kondensator (1) nach einem der Ansprüche 1 bis 5, wobei der zylinderförmige Wickel (20) des Kondensators (1) selbstheilend ausgebildet ist.

7. Kondensator (1) nach einem der Ansprüche 1 bis 6, wobei der erste elektrische Anschluss (11) ein Mittel (31) zur Verbindung mit einer ersten Stromschiene aufweist und der zweite elektrische Anschluss (12) ein weiteres Mittel (32) zur Verbindung mit einer zweiten Stromschiene aufweist, wobei das Mittel (31) zur Verbindung mit der ersten Stromschiene und das weitere Mittel (32) zur Verbindung mit der zweiten Stromschiene unterschiedlich zum Kondensatorbecher (2) beabstandet sind.

8. Kondensator (1) nach einem der Ansprüche 1 bis 7, wobei der Kondensatordeckel (3) einen dritten elektrischen Anschluss (13) aufweist, wobei der dritte elektrische Anschluss (13) mit dem Kondensatordeckel (3) elektrisch verbunden ist.

9. Kondensator (1) nach einem der Ansprüche 1 bis 8, wobei der Kondensator (1) mindestens zwei Wickel (20) aufweist, wobei die Wickel (20) elektrisch in Serienschaltung angeordnet sind.

10. Kondensatorbank (5) mit einer Vielzahl von Kondensatoren (1) nach einem der Ansprüche 1 bis 9, wobei die Kondensatoren (1) in einem Gehäuse (6) angeordnet sind, wobei das Gehäuse (6) elektrisch isolierend ausgebildet ist.
